# FASCICULE DE BREVET EUROPEEN

(11) **EP 1 726 557 B1**
(45) Date de publication et mention de la délivrance du brevet: **12.09.2007**
(21) Numéro de dépôt: 06290659.9
(22) Date de dépôt: 21.04.2006
(51) Int. Cl.: B66C 19/00, B60P 1/64, B65D 90/00

(54) **Dispositif de manutention de charge et ensemble de manipulation de charge entre deux aires de transport et/ou de stockage**
Lasthandhabungsvorrichtung und System zur Handhabung von Lasten zwischen zwei Transport- und/oder Speicherbereichen
Load manipulation device and load manipulation system between two transport and/or storage areas

(30) Priorité: 17.05.2005 FR 0504936
(43) Date de publication de la demande: 29.11.2006
(73) Titulaire: B.X.L., 85000 La Roche sur Yon (FR)
(72) Inventeur: Janghov, Michaël, 44190 St Hilaire de Clisson (FR); Sastre, Vincent, 85100 Les Sables D'Olonne (FR)
(74) Mandataire: Laget, Jean-Loup

(56) Documents cités:
- DE-A1- 4 100 010
- US-A- 2 702 139
- US-A- 2 763 383
- US-A- 3 174 630
- US-A- 3 482 716
- US-A- 4 830 566

## Description

La présente invention concerne un dispositif de manutention de charge, de forme quelconque, et généralement exempte d'organes de prise, telle que colis, bobine, pile de plaques ou autres, susceptible d'être transférée et/ou manipulée à l'aide de grues jumelles porte-conteneur, à chargement/déchargement latéral, intégrées à un plateau de chargement, de préférence mobile, ainsi qu'un ensemble de manipulation de charge entre deux aires de transport et/ou de stockage du type comprenant au moins deux grues jumelles montées sur un plateau de chargement, de préférence mobile et un dispositif de manutention du type précité.

De nombreuses charges, telles que bobines, plaques de tôle ou autres ne peuvent être transportées par le rail en raison des difficultés de déchargement de telles charges. En effet, du fait que ces charges sont exemptes de prises, elles nécessitent une lourde infrastructure pour leur transfert entre deux aires. Pour pallier ce problème, on a tenté d'utiliser des grues jumelles à chargement/déchargement latéral généralement destinées au transfert de conteneur. On a ainsi modifié ces grues en les couplant entre elles par une structure rigide de type poutre, cette poutre étant équipée de câbles de saisie de la charge. Cette solution ne donne pas satisfaction car elle oblige à une transformation des grues, les rendant alors indisponibles pour le transfert de conteneur. Une telle immobilisation de deux grues dédiées au transfert de charges particulières exemptes d'organes de prise n'est pas rentable et a donc été abandonnée.

On connaît également, à travers le document allemand DE 4100010, un dispositif de manutention de charge constitué d'un conteneur à faces latérales ajourées pour alléger ledit conteneur, ce conteneur logeant une charge de type cuve reposant sur le plancher du conteneur. Ce conteneur est équipé à sa base de roulettes permettant son déplacement au sol par appui roulant. Dans cette solution, il est nécessaire de disposer au sol d'un engin de manutention pour introduire ou sortir la charge formée par une cuve du conteneur. En conséquence, une telle solution est complexe à mettre en oeuvre et ne résout pas le problème de la manutention de charges exemptes de moyens de saisie.

Le brevet US-2.763.383 décrit quant à lui une structure roulante constituée d'un plancher roulant surmonté d'arceaux reliés entre eux par une poutre le long de laquelle se déplacent des moyens de saisie d'une charge. Cette poutre se prolonge au-delà du plancher pour permettre à l'aide des moyens de saisie la prise d'une charge au sol et son amenée sur ledit plancher roulant. Une telle structure n'est pas transférable d'un plateau de chargement à un autre. En outre, une telle conception ne permet que le chargement/déchargement de charges de faible encombrement sauf à avoir une poutre qui dépasse largement de ladite structure.

Un but de la présente invention est donc de proposer un dispositif de manutention de charge dont la conception ne nécessite aucune modification des grues associées au dispositif, ces dernières pouvant à tout moment être rendues disponibles pour une utilisation traditionnelle de transfert de conteneurs.

Un autre but de la présente invention est de proposer un dispositif de manutention de charge dont la conception permet une immobilisation temporaire de la charge, notamment sur le plateau de chargement intégré aux grues, en vue de permettre un déplacement de la charge sur l'aire de stockage sans avoir à arrimer la charge.

Un autre but de la présente invention est de proposer un ensemble de manutention dont la conception permet son utilisation pour la manutention de tout type de charge.

A cet effet, l'invention a pour objet un dispositif de manutention de charge, de forme quelconque et généralement exempte d'organes de prise, telle que colis, bobine, pile de plaques, susceptible d'être transférée et/ou manipulée à l'aide de grues jumelles porte-conteneur, à chargement/déchargement latéral, intégrées à un plateau de chargement, de préférence mobile, caractérisé en ce qu'il se présente sous forme d'une ossature à claire-voie formant une interface mobile entre les grues porte-conteneur et la charge, cette ossature étant munie d'une part, de moyens de saisie de la charge pour la rendre solidaire en déplacement de l'ossature, d'autre part, d'organes standards d'accouplement aux grues faisant en outre office d'organes de verrouillage pour permettre le déplacement de l'ensemble charge/ossature à la manière d'un conteneur.

La mise en place, sur l'ossature à claire-voie formant interface mobile entre les grues porte-conteneur et la charge, d'organes standard d'accouplement aux grues encore appelés par l'homme du métier "coin conteneur" permet de déplacer l'ossature à claire-voie à la manière d'un conteneur sans avoir à modifier la conception, en particulier les élingues de suspension de charge, de la grue. L'ossature à claire-voie est ainsi traitée de la même manière qu'un conteneur de telle sorte qu'une installation traditionnelle peut être utilisée pour la manipulation d'une telle ossature.

De manière caractéristique à l'invention, l'ossature à claire-voie se présente sous la forme générale d'un parallélépipède dont au moins la base, qui constitue la face d'introduction de la charge à l'intérieur de l'ossature, est ouverte pour un positionnement de l'ossature à l'aplomb de la charge devant être saisie par lesdits moyens de saisie. A nouveau, la réalisation de l'ossature sous forme d'un parallélépipède à base ou face formant fond ouverte, cette face constituant une face d'introduction de la charge à l'intérieur de ladite ossature, permet la manipulation de tout type de charge. En effet, il suffit à l'ossature qui affecte par exemple la forme traditionnelle d'un conteneur exempt de plancher et à faces latérales ou du dessus généralement ajourées de venir se positionner au-dessus de la charge en coiffant cette dernière pour ensuite la manipuler à l'aide des moyens de saisie portés par l'ossature en vue de la rendre solidaire de l'ossature, l'ossature étant ensuite déplacée avec sa charge à la manière d'un conteneur. Cette disposition permet de manipuler des charges de dimension quelconque sans accroître l'encombrement de l'ossature et des moyens de saisie associés.

Parallèlement, cette ossature est équipée de moyens de saisie de la charge qui sont adaptés aux charges particulières à transférer de telle sorte que tout type de charge peut être saisi à l'aide d'un tel dispositif de manutention. Il en résulte donc un grand nombre d'avantages par rapport aux installations traditionnelles.

L'invention a encore pour objet un ensemble de manipulation de charge entre deux aires de transport et/ou de stockage du type comprenant au moins deux grues jumelles montées sur un plateau de chargement, de préférence mobile, caractérisé en ce que ledit ensemble comporte en outre un dispositif de manutention de charge du type précité.

L'invention sera bien comprise à la lecture de la description suivante d'exemples de réalisation, en référence aux dessins annexés dans lesquels :
la figure 1 représente une vue en perspective d'un dispositif de manutention de charge conforme à l'invention ;
la figure 2 représente une vue en perspective de grues jumelles intégrées à un plateau de chargement mobile ;
la figure 3 représente une vue en perspective du dispositif de manutention de la figure 1 à l'état couplé à deux grues jumelles au cours du transfert d'une charge d'un wagon sur le plateau de chargement auquel les grues sont intégrées ;
la figure 4 représente une vue en perspective d'un ensemble de manipulation de charge conforme à l'invention, la charge étant positionnée sur le plateau de chargement dans lequel les grues porte-conteneur sont intégrées ;
la figure 5 représente une vue en perspective d'organes de verrouillage, respectivement mâle et femelle, aptes à équiper l'ossature à claire-voie d'une part, la plate-forme intermédiaire ou l'embase des grues d'autre part ;
la figure 6 représente une vue en élévation des organes de verrouillage de la figure 5 à l'état assemblé et verrouillé de ces derniers ;
la figure 7 représente une vue en perspective d'une plate-forme intermédiaire et
la figure 8 représente une vue en perspective d'un autre mode de réalisation d'un dispositif de manipulation de charge conforme à l'invention.

Comme mentionné ci-dessus, le dispositif de manutention de charge 1, objet de l'invention, est plus particulièrement destiné à permettre la manipulation de charges de forme quelconque, ces charges pouvant être équipées ou non d'organes de prise. Dans les exemples représentés, le dispositif de manutention est appliqué au déplacement de bobine, généralement transportée par rail et devant être déchargée sur un plateau de chargement mobile pour son transport par route. Dans un contexte rail/route, le dispositif de manutention s'applique de la même manière à la manutention de charge, telle que colis, pile de plaques ou autres. Ce dispositif de manutention s'intègre dans un ensemble de manipulation de charge 1 entre deux aires de transport et/ou de stockage, du type comprenant au moins deux grues 2A, 2B jumelles montées sur un plateau 8 de chargement, de préférence mobile.

Les remorques porte-conteneur à grues intégrées au plateau 8 de chargement de la remorque sont bien connues à ceux versés dans cet art. Ces remorques comportent généralement aux extrémités avant et arrière d'un châssis équipé de roues 9 une grue 2A, 2B reposant sur le plateau 8 porte-charge formé ici par deux longerons. Chaque grue 2A, 2B, à chargement/déchargement latéral, est généralement constituée de deux bras 3, 4 s'étendant transversalement à l'axe longitudinal du châssis. Ainsi, dans les exemples représentés, le bras 3 constitue le bras de levage supérieur de la grue tandis que le bras 4 constitue le bras de levage inférieur de la grue. Ces bras 3 et 4 sont reliés l'un à l'autre par une liaison 5 pivot et sont chacun mus en déplacement par l'intermédiaire d'un vérin. Dans les figures, seul le vérin 6 permettant le déplacement du bras 3 supérieur a été référencé. De telles grues permettent la manipulation d'un conteneur de grande dimension en vue notamment d'effectuer son transfert entre le sol et un plateau de chargement ou entre deux plateaux de chargement de remorque disposés côte à côte.

Le positionnement des grues 2A, 2B sur le plateau 8 de charge de la remorque oblige à procéder systématiquement à un chargement latéral des conteneurs, chaque conteneur venant s'insérer dans l'espace laissé libre entre lesdites grues. A l'extérieur de cet intervalle, chaque grue est bordée par un dispositif 7 de stabilisation tel qu'une jambe de force télescopique dont l'objectif est d'empêcher un basculement du châssis notamment lors du transfert du conteneur entre le sol et le plateau 8 de chargement.

Pour permettre le déplacement des conteneurs, les grues sont équipées d'élingues 21 de suspension de charge, ces élingues coopérant à ou au voisinage de leurs extrémités libres avec des organes d'accouplement standard complémentaires ménagés sur les conteneurs et appelés "coin conteneur". Chaque coin conteneur se présente sous forme d'un plot muni d'orifices traversant permettant le positionnement des élingues à travers lesdits orifices.

Le dispositif de manutention de charge, objet de l'invention, est destiné à coopérer avec de telles grues jumelles porte-conteneur à la manière d'un conteneur. Ce dispositif de manutention de charge se présente sous forme d'une ossature 11 à claire-voie formant une interface mobile entre les grues 2A, 2B porte-conteneur et la charge 1. Cette interface est une interface mobile déplaçable à l'aide des grues pour permettre son positionnement près de la charge, puis, une fois la charge saisie, le déplacement de la charge d'un emplacement à un autre. Cette ossature 11, qui peut se positionner sur le plateau 8 de chargement dans l'intervalle laissé libre entre les grues 2A, 2B, est munie d'une part, de moyens 17, 18 de saisie de la charge 1 pour la rendre solidaire en déplacement de l'ossature 11, d'autre part, d'organes 14 standards d'accouplement aux grues 2A, 2B faisant en outre office d'organes de verrouillage pour permettre d'une part le déplacement de l'ensemble charge 1/ossature 11 à la manière d'un conteneur, d'autre part la solidarisation de l'ossature à une plate-forme de réception quelconque équipée d'organes de verrouillage complémentaires.

Dans les exemples représentés, l'ossature 11 se présente sous la forme générale d'un parallélépipède dont au moins la base 24 est une face ouverte constituant la face d'introduction de la charge 12 à l'intérieur de ladite ossature 11. Le fait de pouvoir introduire la charge 12 à l'intérieur de l'ossature 11 par la base du parallélépipède présente un certain nombre d'avantages. Elle permet en effet de positionner l'ossature 11 à l'aplomb de la charge 1 à saisir avant saisie de la charge par lesdits moyens de saisie. On limite ainsi l'encombrement de l'ensemble par rapport à des structures où le chargement/déchargement de la charge se fait par des moyens de saisie qui viennent se positionner en déport de l'ossature. Par ailleurs, comme l'ossature vient coiffer la charge introduite à l'intérieur de l'ossature par la face formant plancher de ladite ossature, les dimensions de la charge peuvent être quelconques sans nuire à sa saisie. A nouveau, tel n'est pas le cas d'une installation où les moyens de saisie de la charge sont déportés par rapport à ladite ossature. Enfin, le fait de pouvoir venir positionner l'ossature à l'aplomb de la charge permet de saisir la charge et de la maintenir en attente jusqu'à ce que l'ensemble de l'ossature soit manipulé par les grues et amené d'une position à une autre.

Ainsi, il est possible d'imaginer de disposer de plusieurs interfaces présentant chacune une charge en attente, le plateau de charge de la remorque équipée de grues venant se positionner au fur et à mesure le long de chacune des interfaces pour charger l'interface sur le plateau de charge de la remorque et décharger la charge en attente sur ladite interface avant de repositionner l'interface au sol et de reproduire la même opération avec une nouvelle interface équipée d'une charge en attente. En outre, le fait de disposer d'une face formant fond ouverte au niveau de l'ossature permet un chargement/déchargement latéral aisé d'un plateau de charge par déplacement de l'interface du plateau 8 de charge de la remorque à un plateau adjacent. L'ossature ainsi réalisée présente, en coopération avec la charge, un faible encombrement et ne nécessite pas de disposer au sol, outre l'encombrement de l'ossature, d'un emplacement pour la charge.

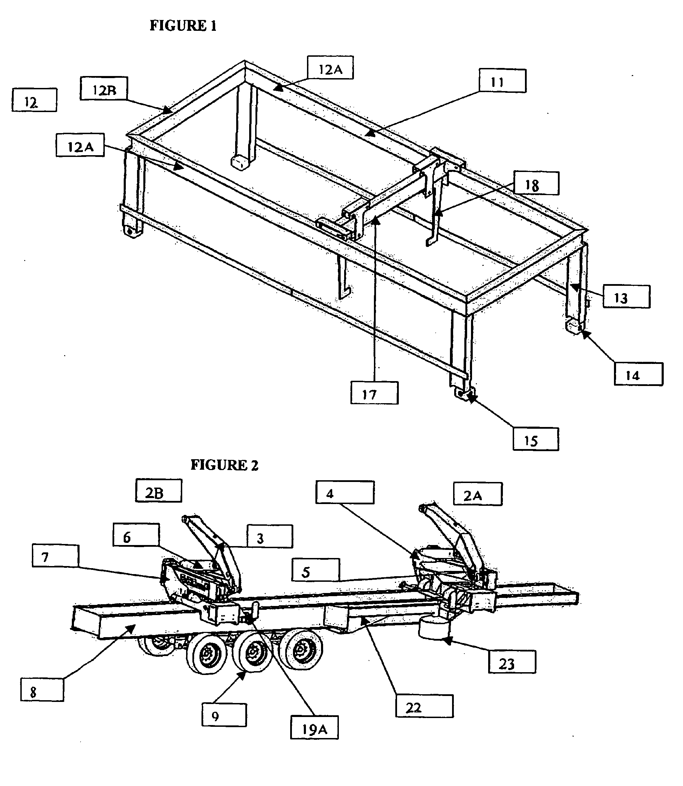

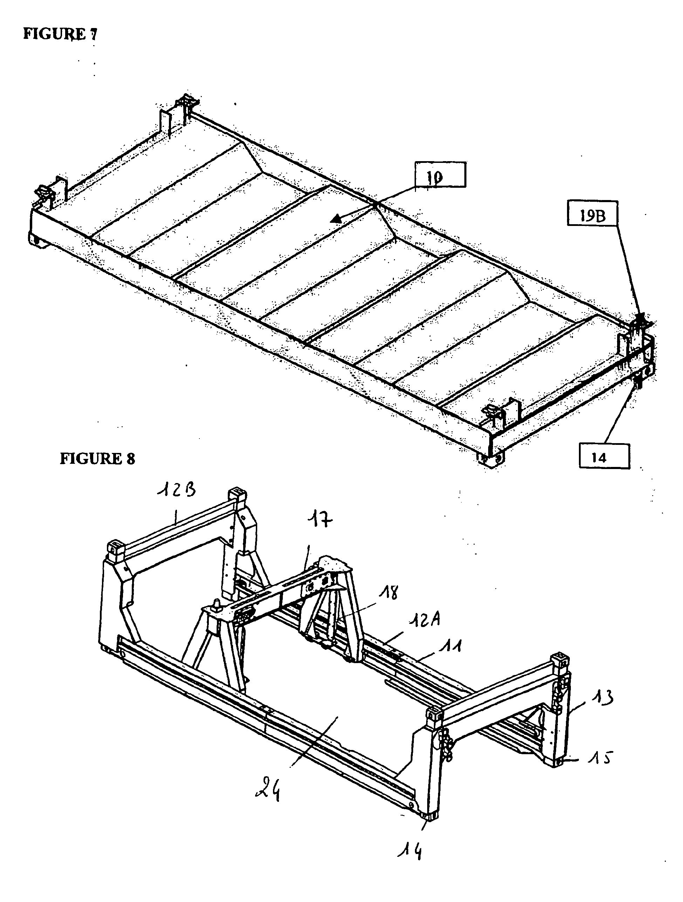

Deux modes de réalisation d'une telle ossature ont été représentés, l'un à la figure 1, l'autre à la figure 8.

Dans l'exemple représenté à la figure 1, la face du dessus du parallélépipède affecte la forme d'un cadre 12 constitué de longerons 12A et de traverses 12B. Les longerons 12A forment des moyens de guidage pour les moyens 17, 18 de saisie de la charge 1. Cette ossature 11 présente encore des piètements 13 d'appui sur un plateau 8 de chargement quelconque. Ces piètements 13 sont disposés aux angles du cadre et constituent des montants verticaux. Au moins certains des piètements sont munis à leur base d'organes 14 standard d'accouplement aux grues 2A, 2B. Comme mentionné ci-dessus, ces organes 14 standard d'accouplement sont similaires à ceux équipant les conteneurs et appelés généralement coin conteneur par l'homme du métier. Ainsi, l'ossature reproduit la forme générale d'un conteneur exempt de plancher et à autres faces ajourées. Ces montants 13 verticaux peuvent en outre être reliés, au voisinage de leur base, par des raidisseurs. La base du parallélépipède est quant à elle une face ouverte permettant le positionnement de l'ossature à l'aplomb de la charge à saisir et l'introduction de la charge à l'intérieur de l'ossature par cette face ouverte constituant la base du parallélépipède.

Dans l'exemple représenté à la figure 8, l'ossature est, de la même manière que dans la figure 1, de forme parallélépipédique. Elle est à nouveau obtenue par assemblage de longerons 12A, de traverses 12B et de montants 13 d'angle formant piètement. Les longerons 12A de l'ossature 11 forment à nouveau des moyens de guidage pour les moyens 17, 18 de la charge 1.

Ces moyens de saisie de la charge sont également à nouveau constitués d'une poutre 17 mobile guidée le long desdits longerons 12A, cette poutre 17 portant deux mors 18 de prise de la charge 1. Toutefois, d'autres modes de réalisation des moyens de saisie auraient pu être imaginés de manière équivalente. Les organes 14 standards d'accouplement sont quant à eux positionnés aux angles de la base du parallélépipède constitutif de l'ossature 11, en l'occurrence à l'extrémité inférieure des montants 13 d'angle verticaux du parallélépipède. Ces montants 13 sont ici reliés par deux traverses 12B supérieures et par deux longerons 12A inférieurs. Les longerons 12A délimitent les bords longitudinaux de la base du parallélépipède. A nouveau, la base 24 du parallélépipède est une face ouverte qui constitue la face d'introduction de la charge 1 à l'intérieur de l'ossature 11. A nouveau, l'ossature 11 est donc à même de coiffer la charge 1 à saisir, les moyens de saisie étant disposés à l'intérieur du périmètre du parallélépipède formé par l'ossature 11.

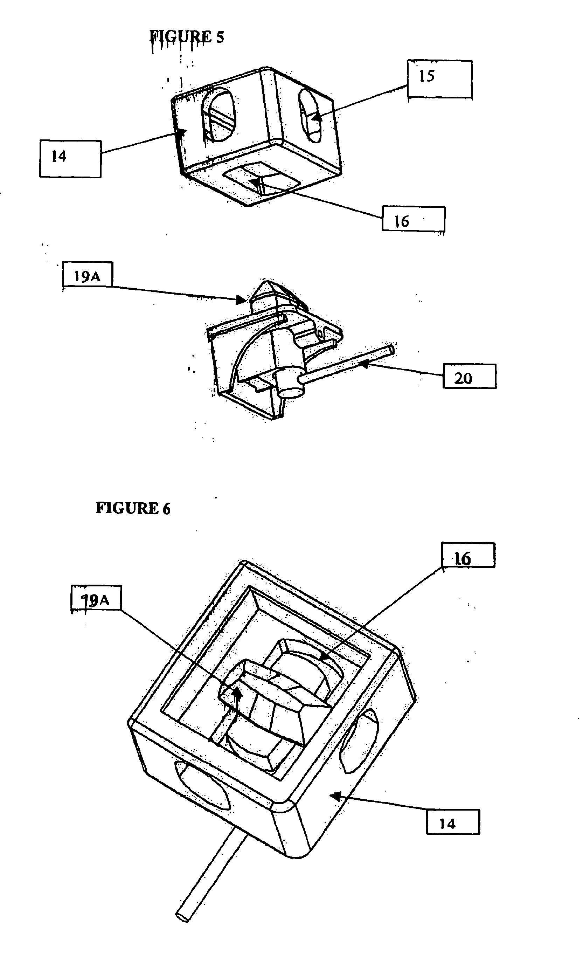

Dans les exemples représentés, chaque organe 14 standard d'accouplement se présente sous forme d'un plot évidé dont certaines parois présentent des orifices 15 de prise destinés à coopérer avec les élingues 21 de suspension de charge de la grue 2A, 2B tandis que le fond du plot présente un orifice traversant ou un verrou pivotant formant un organe de verrouillage femelle ou mâle. Dans la figure 1, l'organe de verrouillage équipant la base du piètement 13 de l'ossature 11 est un organe de verrouillage femelle réalisé sous forme d'un orifice 16 traversant ménagé dans la paroi de fond du plot. Cet organe de verrouillage est destiné à coopérer avec un organe de verrouillage mâle de type verrou pivotant, ce verrou étant actionné par l'intermédiaire d'une tige de manoeuvre radiale à l'axe de pivotement du verrou représentée en 20 à la figure 5. Ce verrou est donc introduit dans l'orifice 16 traversant puis entraîné en déplacement à pivotement par l'intermédiaire de la tige de manoeuvre 20 de manière à assurer une immobilisation entre plot et verrou. La lumière 16 oblongue, ménagée à l'intérieur du plot, affecte ainsi la forme d'une boutonnière dont le bouton serait constitué par le verrou 19A, ce verrou étant introduit suivant l'axe longitudinal de la lumière formée par la boutonnière avant d'être déplacé à pivotement pour adopter une position transversale à cet axe longitudinal et se verrouiller ainsi à l'intérieur de ladite boutonnière.

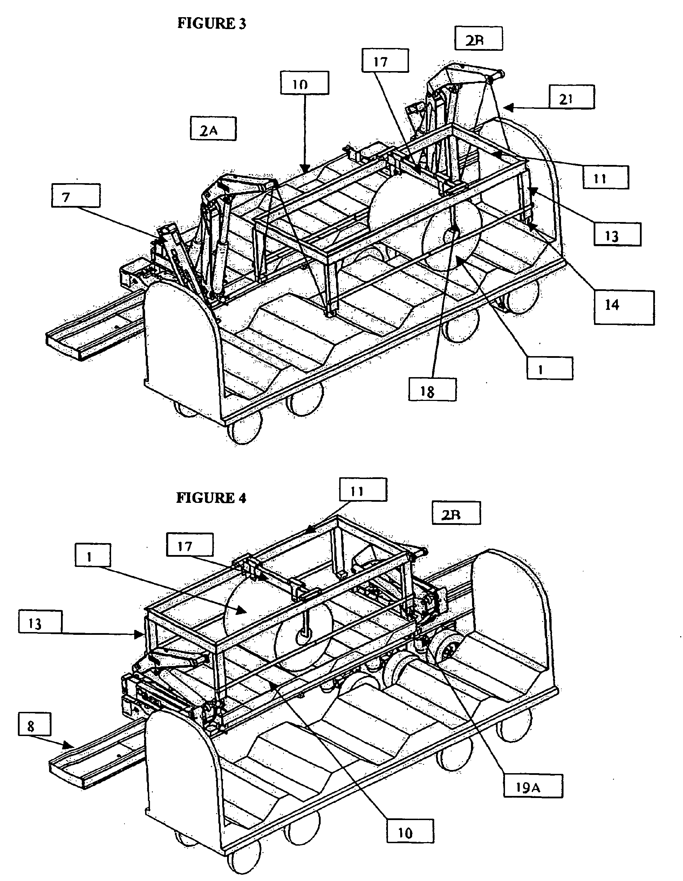

L'ossature 11 comporte encore des moyens 17, 18 de saisie de la charge 1. Ces moyens 17, 18 de saisie sont constitués, dans les exemples représentés, d'une poutre 17 mobile guidée le long des longerons 12A du cadre de l'ossature, cette poutre 17 portant deux mors 18 de prise de la charge 1. Ainsi, dans le cas d'une application au transfert d'une bobine, ces mors viennent enserrer les faces d'extrémité de la bobine en se positionnant par leur extrémité libre au niveau du mandrin de ladite bobine. Ces moyens 17, 18 de saisie permettent ainsi de rendre solidaire la charge 1 de l'ossature 11 à claire-voie, cette ossature 11 à claire-voie étant ensuite manipulée à l'aide des élingues 21 de chaque grue porte-conteneur venant se positionner au niveau des orifices 15 de prise des organes 14 standard d'accouplement équipant le piètement de l'ossature. Grâce à cette disposition, les opérations de transfert de charge peuvent s'effectuer de manière extrêmement aisée comme l'illustre le passage de la figure 3 à la figure 4. En effet, une fois les mors 18 de prise de la charge positionnés sur la charge, il suffit à l'aide des grues de manipuler l'ensemble formé par l'ossature 11 la poutre 17 et les mors 18 pour amener la charge jusque sur un plateau 8 de chargement qui correspond à l'intervalle laissé libre entre lesdites grues 2A, 2B.

Dans un mode de réalisation particulier de l'invention, l'ensemble de manipulation de charge comporte en outre une plate-forme 10 intermédiaire équipée sur chacune de ses faces d'organes 14, 19B de verrouillage complémentaires d'une face à une autre, cette plate-forme 10 étant indifféremment couplable à l'ensemble grues 2A, 2B/plateau 18 de chargement ou à l'ossature 11, en particulier aux piètements 13 de l'ossature du dispositif de manutention. De manière analogue, les organes 14 d'accouplement et de verrouillage de l'ossature 11 coopèrent indifféremment soit avec des organes 19A de verrouillage complémentaires équipant l'embase des grues 2A, 2B jumelles, soit avec des organes 19B de verrouillage complémentaires portés par une plate-forme 10 intermédiaire. Ainsi, dans les exemples représentés, la plate-forme 10 intermédiaire, dont la surface a été aménagée pour former des berceaux de réception de bobine, est munie d'organes 14 femelles similaires à ceux équipant les piètements 13 de l'ossature 11 pour permettre le verrouillage de la plate-forme 10 à des organes 19A de verrouillage complémentaires équipant l'embase des grues tandis que son autre face est équipée d'organes 19B de verrouillage mâle destinés à coopérer avec les organes 14 de verrouillage femelle équipant le piètement de l'ossature 11.

Grâce au fait que les organes 14 d'accouplement équipant les piètements 13 de l'ossature 11 jouent en outre le rôle d'organe de verrouillage, il est possible de déplacer la charge amenée sur le plateau de chargement mobile auquel sont intégrées les grues jumelles d'une position à une autre sans avoir à arrimer la charge. Bien évidemment, en cas de transport sur routes, il devient nécessaire d'arrimer la charge. On peut alors réutiliser l'ensemble formé de l'ossature et des moyens de prise pour le transfert d'une nouvelle charge.

Dans les exemples représentés, l'ensemble de manipulation de charge comporte un plateau 8 de chargement équipé d'un contrepoids réalisé sous forme d'un bras 22 pivotant équipé à son extrémité d'un lest 23 de préférence amovible. Cet ensemble remplit la même fonction que le dispositif 7 de stabilisation des grues mentionné ci-dessus.

Comme l'illustrent les figures 3 et 4, le transfert d'une charge 1 entre deux aires de stockage ou de transport s'avère extrêmement aisé. Une fois ce transfert de charge terminé, l'ensemble formé de l'ossature 11 et des moyens 17, 18 de prise peut être stocké en un endroit approprié laissant alors libre l'opérateur d'utiliser les grues jumelles de manière traditionnelle pour le transfert de conteneurs. Dès qu'une charge spécifique exempte de prise se présente, il accouple l'ossature aux grues par l'intermédiaire des élingues de suspension de charge desdites grues et ce, à la manière d'un conteneur pour pouvoir manipuler la charge. Ainsi, avec un tel ensemble de manipulation de charge, il est possible de manipuler n'importe quel type de charge sans avoir à modifier la conception des grues jumelles.

## Revendications

1. Dispositif de manutention de charge (1), de forme quelconque et généralement exempte d'organes de prise, telle que colis, bobine, pile de plaques, susceptible d'être transférée et/ou manipulée à l'aide de grues (2A, 2B) jumelles porte-conteneur, à chargement/déchargement latéral, intégrées à un plateau (8) de chargement, de préférence mobile,
**caractérisé en ce qu**'il se présente sous forme d'une ossature (11) à claire-voie formant une interface mobile entre les grues (2A, 2B) porte-conteneur et la charge (1), cette ossature (11) étant munie d'une part, de moyens (17, 18) de saisie de la charge (1) pour la rendre solidaire en déplacement de l'ossature (11), d'autre part, d'organes (14) standards d'accouplement aux grues (2A, 2B) faisant en outre office d'organes de verrouillage pour permettre le déplacement de l'ensemble charge (1)/ossature (11) à la manière d'un conteneur.

2. Dispositif de manutention de charge (1) selon la revendication 1,
**caractérisé en ce que** l'ossature (11) présente des piètements (13) d'appui sur un plateau (8) de chargement quelconque, au moins certains des piètements (13) étant munis d'organes (14) standard d'accouplement aux grues (2A, 2B).

3. Dispositif de manutention de charge (1) selon l'une des revendications 1 et 2,
**caractérisé en ce que** chaque organe (14) standard d'accouplement se présente sous forme d'un plot évidé dont certaines parois présentent des orifices (15) de prise destinés à coopérer avec les élingues (21) de suspension de charge de la grue (2A, 2B) tandis que le fond du plot présente un orifice (16) traversant ou un verrou pivotant formant organe de verrouillage femelle ou mâle.

4. Dispositif de manutention de charge (1) selon la revendication 1,
**caractérisé en ce que** les organes (14) d'accouplement et de verrouillage de l'ossature (11) coopèrent indifféremment soit avec des organes (19A) de verrouillage complémentaires équipant l'embase des grues (2A, 2B) jumelles, soit avec des organes (19B) de verrouillage complémentaires portés par une plate-forme (10) intermédiaire.

5. Dispositif de manutention de charge (1) selon la revendication 1,
**caractérisé en ce que** l'ossature (11) à claire-voie se présente sous la forme générale d'un parallélépipède dont au moins la base (24), qui constitue la face d'introduction de la charge à l'intérieur de l'ossature (11), est ouverte pour un positionnement de l'ossature (11) à l'aplomb de la charge (1) devant être saisie par lesdits moyens (17, 18) de saisie.

6. Dispositif de manutention de charge (1) selon la revendication 5,
**caractérisé en ce que** l'ossature (11) de forme parallélépipédique est obtenue par l'assemblage de longerons (12A), de traverses (12B) et de montants (13), les longerons (12A) de l'ossature (11) formant des chemins de guidage pour les moyens (17, 18) de saisie de la charge (1), ces moyens (17, 18) de la charge étant constitués d'une poutre (17) mobile guidée le long desdits longerons (12A), cette poutre (17) portant deux mors (18) de prise de la charge (1).

7. Dispositif de manutention de charge (1) selon la revendication 5,
**caractérisé en ce que** les organes (14) standard d'accouplement sont positionnés aux angles de la base du parallélépipède constitutif de l'ossature (11).

8. Ensemble de manipulation de charge (1) entre deux aires de transport et/ou de stockage du type comprenant au moins deux grues (2A, 2B) jumelles montées sur un plateau (8) de chargement, de préférence mobile,
**caractérisé en ce que** ledit ensemble comporte en outre un dispositif de manutention de charge conforme à l'une quelconque des revendications 1 à 7.

9. Ensemble de manipulation de charge (1) selon la revendication 8,
**caractérisé en ce qu**'il comporte une plate-forme (10) intermédiaire équipée, sur chacune de ses faces, d'organes (14, 19B) de verrouillage complémentaires d'une face à une autre, ladite plate-forme (10) étant indifféremment couplable à l'ensemble grues (2A, 2B)/plateau (8) de chargement ou à l'ossature (11), en particulier aux piètements (13) de l'ossature du dispositif de manutention.

10. Ensemble de manipulation de charge (1) selon la revendication 8,
**caractérisé en ce que** le plateau (8) de chargement est équipé d'un contrepoids réalisé sous forme d'un bras (22) pivotant équipé, à son extrémité, d'un lest (23) de préférence amovible.

## Claims

1. A device for handling a load (1), of any shape and generally without holding members, such as a parcel, coil, stack of sheets, capable of being transferred and/or handled by means of side-loading/-unloading twin container-carrying cranes (2A, 2B), incorporated into a preferably mobile loading table (8), **characterised in that** it takes the form of an open framework (11) forming a mobile interface between the container-carrying cranes (2A, 2B) and the load (1), said framework (11) being provided on the one hand with means (17, 18) for gripping the load (1) such that it is displaced jointly with the framework (11), and on the other hand with standard members (14) for coupling to the cranes (2A, 2B) and acting additionally as locking members for allowing displacement of the load (1) /framework (11) assembly in the manner of a container.

2. A device for handling a load (1) according to claim 1, **characterised in that** the framework (11) has feet (13) for resting on any loading table (8), at least some of the feet (13) being provided with standard members (14) for coupling to the cranes (2A, 2B).

3. A device for handling a load (1) according to one of claims 1 and 2, **characterised in that** each standard coupling member (14) takes the form of a hollowed-out block, some of whose walls have engaging orifices (15) intended to cooperate with the load suspension slings (21) of the crane (2A, 2B) while the bottom of the block has a through-orifice (16) or a twist lock forming a female or male locking member.

4. A device for handling a load (1) according to claim 1, **characterised in that** the coupling and locking members (14) of the framework (11) cooperate equally well either with complementary locking members (19A) with which the base of the twin cranes (2A, 2B) is equipped or with complementary locking members (19B) borne by an intermediate platform (10).

5. A device for handling a load (1) according to claim 1, **characterised in that** the open framework (11) takes the general form of a parallelepiped, of which at least the base (24), which constitutes the face from which the load is introduced into the interior of the framework (11), is open for positioning of the framework (11) directly above the load (1) needing to be gripped by said gripping means (17, 18).

6. A device for handling a load (1) according to claim 5, **characterised in that** the parallelepipedal framework (11) is obtained by assembling side bars (12A), crossbars (12B) and uprights (13), the side bars (12A) of the framework (11) forming guide paths for the means (17, 18) for gripping the load (1), said means (17, 18) for the load consisting of a mobile beam (17) guided along said side bars (12A), said beam (17) bearing two jaws (18) for engaging with the load (1).

7. A device for handling a load (1) according to claim 5, **characterised in that** the standard coupling members (14) are positioned at the corners of the base of the parallelepiped of which the framework (11) consists.

8. An assembly for handling a load (1) between two transport and/or storage areas of the type comprising at least two twin cranes (2A, 2B) mounted on a preferably mobile loading table (8), **characterised in that** said assembly further comprises a load handling device according to any one of claims 1 to 7.

9. An assembly for handling a load (1) according to claim 8, **characterised in that** it comprises an intermediate platform (10) equipped, on each of its faces, with locking members (14, 19B) complementary from one face to the other, said platform (1) being couplable equally well with the assembly comprising the cranes (2A, 2B) and the loading table (8) or with the framework (11), in particular with the feet (13) of the framework of the handling device.

10. An assembly for handling a load (1) according to claim 8, **characterised in that** the loading table (8) is equipped with a counterweight in the form of a pivoting arm (22) equipped, at its end, with a preferably removable ballast (23).

## Patentansprüche

1. Vorrichtung zur Handhabung von Lasten (1), die eine beliebige Form aufweisen und im Allgemeinen ohne Greifelement ausgebildet sind, beispielsweise von Paketen, Spulen, Plattenstapeln, und die mithilfe von Zwillingskranen (2A, 2B) zur Containerhandhabung mit seitlicher Beladung/Entladung, die in eine vorzugsweise bewegliche Ladeplattform (8) integriert sind, verfahren und/oder gehandhabt werden können, **dadurch gekennzeichnet, dass** sie in Form eines offenen Gerüstes (11) ausgeführt ist, das eine bewegliche Schnittstelle zwischen den Containerhandhabungskranen (2A, 2B) und der Last (1) bildet, wobei das Gerüst (11) zum einen mit Mitteln (17, 18) zur Aufnahme der Last (1), um sie mit dem Gerüst (11) während der Bewegung starr zu verbinden, und zum anderen mit Standardelementen (14) für die Verbindung mit den Kranen (2A, 2B) versehen ist, die zudem als Verriegelungselemente dienen, um die Bewegung der Einheit Last (1) /Gerüst (11) wie bei einem Container zu ermöglichen.

2. Vorrichtung zur Handhabung von Lasten (1) nach Anspruch 1, **dadurch gekennzeichnet, dass** das Gerüst (11) Fußgestelle (13) aufweist, die auf einer beliebigen Ladeplattform (8) aufstehen, wobei wenigstens einige der Fußgestelle (13) mit Standardelementen (14) für die Verbindung mit den Kranen (2A, 2B) versehen sind.

3. Vorrichtung zur Handhabung von Lasten (1) nach einem der Ansprüche 1 und 2, **dadurch gekennzeichnet, dass** jedes Standardverbindungselement (14) in Form eines hohlen Klotzes ausgeführt ist, der Aufnahmeöffnungen (15) aufweist, die dafür vorgesehen sind, mit den Lastaufhängungsseilen (21) des Krans (2A, 2B) zusammenzuwirken, während der Boden des Klotzes eine Öffnung (16) aufweist, durch die ein drehbeweglicher Riegel führt, der entweder ein Mutterteil oder ein Vaterteil zur Verriegelung bildet.

4. Vorrichtung zur Handhabung von Lasten (1) nach Anspruch 1, **dadurch gekennzeichnet, dass** die Standardverbindungs- und Verriegelungselemente (14) des Gerüstes (11) unterschiedslos entweder mit den zusätzlichen Verriegelungselementen (19A), mit denen der Sockel der Zwillingskrane (2A, 2B) ausgerüstet ist, oder mit den zusätzlichen Verriegelungselementen (19B), die von einer Zwischenplattform (10) getragen werden, zusammenwirken.

5. Vorrichtung zur Handhabung von Lasten (1) nach Anspruch 1, **dadurch gekennzeichnet, dass** das offene Gerüst (11) allgemein in Form eines Quaders ausgeführt ist, bei dem wenigstens die Grundfläche (24), die die Fläche für die Einführung der Last in das Gerüst (11) bildet, für eine Positionierung des Gerüstes (11) senkrecht zur Last (1), die von den Aufnahmemitteln (17, 18) aufzunehmen ist, offen ist.

6. Vorrichtung zur Handhabung von Lasten (1) nach Anspruch 5, **dadurch gekennzeichnet, dass** das quaderförmige Gerüst (11) durch den Zusammenbau von Längsträgern (12A), Querträgern (12B) und Ständern (13) gebildet ist, wobei die Längsträger (12A) des Gerüstes (11) Führungsbahnen für die Mittel (17, 18) zur Aufnahme der Last (1) bilden, wobei die Mittel (17, 18) einen beweglichen Träger (17) umfassen, der entlang der Längsträger (12A) geführt ist, wobei der Träger (17) zwei Backen (18) zur Aufnahme der Last (1) trägt.

7. Vorrichtung zur Handhabung von Lasten (1) nach Anspruch 5, **dadurch gekennzeichnet, dass** die Standardverbindungselemente an den Ecken der Grundfläche des Quaders, der das Gerüst (11) bildet, angebracht sind.

8. System zur Handhabung von Lasten (1) zwischen zwei Transport- und/oder Lagerbereichen, das mindestens zwei Zwillingskrane (2A, 2B) umfasst, die in eine vorzugsweise bewegliche Ladeplattform (8) integriert sind, **dadurch gekennzeichnet, dass** das System zudem eine Lasthandhabungsvorrichtung nach einem der Ansprüche 1 bis 7 aufweist.

9. System zur Handhabung von Lasten (1) nach Anspruch 8, **dadurch gekennzeichnet, dass** es eine Zwischenplattform (10) aufweist, die an jeder ihrer Seiten mit zusätzlichen Verriegelungselementen (14, 19B) ausgerüstet ist, die von einer Seite zur anderen verlaufen und unterschiedslos mit der Einheit Krane (2A, 2B) /Ladeplattform (8) oder mit dem Gerüst (11), insbesondere mit den Fußgestellen (13) des Gerüstes der Handhabungsvorrichtung, verbunden werden können.

10. System zur Handhabung von Lasten (1) nach Anspruch 8, **dadurch gekennzeichnet, dass** die Ladeplattform (8) mit einem Gegengewicht ausgerüstet ist, das in Form eines Schwenkarmes (22) ausgeführt ist, der an seinem Ende mit einem vorzugsweise beweglichen Ballast (23) ausgerüstet ist.
